# FASCICULE DE BREVET EUROPEEN

(11) **EP 0 715 001 B1**
(45) Date de publication et mention de la délivrance du brevet: **03.03.1999**
(21) Numéro de dépôt: 95116634.7
(22) Date de dépôt: 21.10.1995
(51) Int. Cl.: C23F 1/04

(54) **Procédé de fabrication d'une jante pour cycle et jante réalisée avec ce procédé**
Verfahren zur Herstellung einer Fahrradfelge und nach diesem Verfahren hergestellte Felge
Manufacturing method for a bicycle rim and rim manufactured by this method

(30) Priorité: 30.11.1994 FR 9414573
(43) Date de publication de la demande: 05.06.1996
(73) Titulaire: MAVIC S.A., 01990 Saint-Trivier sur Moignans (FR)
(72) Inventeur: Mercat, Jean-Pierre, F-01990 Chaneins (FR)
(74) Mandataire: Lejeune, Benoit

(56) Documents cités:
- EP-A- 0 579 525
- PATENT ABSTRACTS OF JAPAN vol. 012 no. 252 (C-512) ,15 Juillet 1988 & JP-A-63 038584 (ASAHI MALLEABLE IRON CO LTD) 19 Février 1988,
- METALLOBERFLACHE, vol. 41, no. 6, Juin 1987 MUNCHEN DE, pages 276-281, W. KAHLE 'Bauteilfertigung durch Formteilätzen von Aluminiumlegierungen, Teil 2'
- METALLOBERFLACHE, vol. 41, no. 2, Février 1987 MUNCHEN DE, pages 63-66, W. KAHLE 'Bauteilfertigung durch Formteilätzen von Aluminiumlegierungen, Teil 1'
- INTERNATIONAL METALLURGICAL REVIEWS, vol. 20, Mars 1975 pages 29-55, J. W. DINI 'Chemical milling'

## Description

La présente invention est relative à un procédé de fabrication d'une jante pour cycles. Elle concerne aussi les jantes réalisées avec le procédé.

Les jantes, et notamment celles destinées aux cycles, sont réalisées par un profilé en aluminium cintré. Dans la plupart des cas, elles sont reliées au moyeu par des nappes de rayons afin de constituer la roue du véhicule. Les profilés utilisés sont de différents types, mais ont généralement la forme d'un U, comprenant deux ailes latérales, dont les parois extérieures constituent les faces ou flancs de freinage contre lesquels les patins de frein sont mis en pression pour assurer le freinage désiré.

Les jantes actuelles sont traditionnellement réalisées de façon connue en soi à partir d'un morceau de profilé habituellement en aluminium d'une longueur déterminée, qui est cintré et dont les deux extrémités sont mises en contact et solidarisées. La rigidité de l'anneau ainsi réalisé est bien entendu fonction de la qualité du matériau utilisé pour réaliser le profilé initial et notamment sa résistance, qui est obtenue selon un procédé dit par filage ou par extrusion d'aluminium au travers d'une filière ayant les dimensions et les formes de la section du profilé à réaliser.

Dans le domaine du cycle, les utilisateurs sont de plus en plus exigeants pour le choix de leur matériel et ceux-ci cherchent, bien entendu, le cycle le plus léger et le plus résistant, ce qui, à priori, est incompatible, mais ce problème est solutionné par la présente invention comme nous nous en expliquerons ci-après. En ce qui concerne les jantes des cycles, si le constructeur désire proposer à la vente une jante robuste, il peut, bien entendu, fabriquer la jante en acier, mais ce n'est pas une solution. Si ledit constructeur choisi un alliage léger comme de l'aluminium, il a le choix suivant : soit utiliser un profilé d'épaisseur importante, soit utiliser un profilé réalisé avec un alliage d'aluminium plus résistant. Toutefois, dans le procédé de filage ou d'extrusion, plus le matériau est résistant, plus doit être importante l'épaisseur des parois du profilé à fabriquer. Il en résulte que plus le matériau sera résistant, plus la jante sera lourde et le problème que l'on souhaitait solutionner n'est toujours par réglé.

En outre, plus l'épaisseur du profilé étiré est faible, plus son extrusion, puis son assemblage bout à bout après cintrage sont difficiles. Une solution consisterait à ralentir la vitesse d'étirage, mais c'est au détriment de la productivité.

La présente invention veut donc résoudre les problèmes évoqués précédemment en proposant un procédé de fabrication qui permet de réaliser une jante légère, mais robuste, et ce avec un matériau du type alliage d'aluminium de forte résistance.

Ainsi, le procédé de fabrication d'une jante pour cycle selon l'invention est du type qui consiste à cintrer un morceau de profilé obtenu par filage ou extrusion d'alliage d'aluminium, et est caractérisé en ce que dans une étape complémentaire il est réalisé un usinage chimique qui consiste à procéder à l'enlèvement de métal par dissolution dans un bain chimique agressif. Lors de cette étape complémentaire, la jante est immergée dans un bain chimique agressif du type acide ou basique.

Selon des caractéristiques complémentaires du procédé après la première phase de l'étape complémentaire qui consiste à immerger la jante dans une solution d'attaque pour usinage chimique, il est procédé ensuite à une deuxième phase qui consiste à rincer la jante dans un bain de rinçage contenu dans une deuxième cuve suivie par une troisième phase qui consiste à procéder à une neutralisation dans un bain de neutralisation contenu dans une cuve de neutralisation sulfochromique, puis la jante lors d'une quatrième phase, subit un deuxième rinçage dans un bain de rinçage.

Selon une variante de mise en oeuvre du procédé, le morceau de profilé subit ces différentes opérations avant d'être cintré et assemblé bout à bout.

L'invention concerne aussi la jante pour cycle réalisée selon le procédé de l'invention.

D'autres caractéristiques et avantages de l'invention se dégageront de la description qui va suivre au regard des dessins annexés, qui ne sont donnés qu'à titre d'exemples non limitatifs.

Les figures 1, 2 et 3 illustrent une jante selon l'invention.

La figure 1 est une vue en plan.

La figure 2 est une vue en coupe diamétrale selon II-II.

La figure 3 est une vue en coupe selon III-III à plus grande échelle.

La figure 4 illustre l'étape complémentaire selon l'invention, tandis que la figure 5 montre ce qui est fait lors de cette étape par une coupe transversale de la jante.

La figure 6 illustre la pose d'un oeillet sur la jante, selon un mode préférentiel de réalisation.

La figure 7 représente partiellement vue de l'intérieur une jante selon une variante de mise en oeuvre du procédé selon l'invention.

La figure 8 est une vue partielle de côté de la jante selon la figure 7.

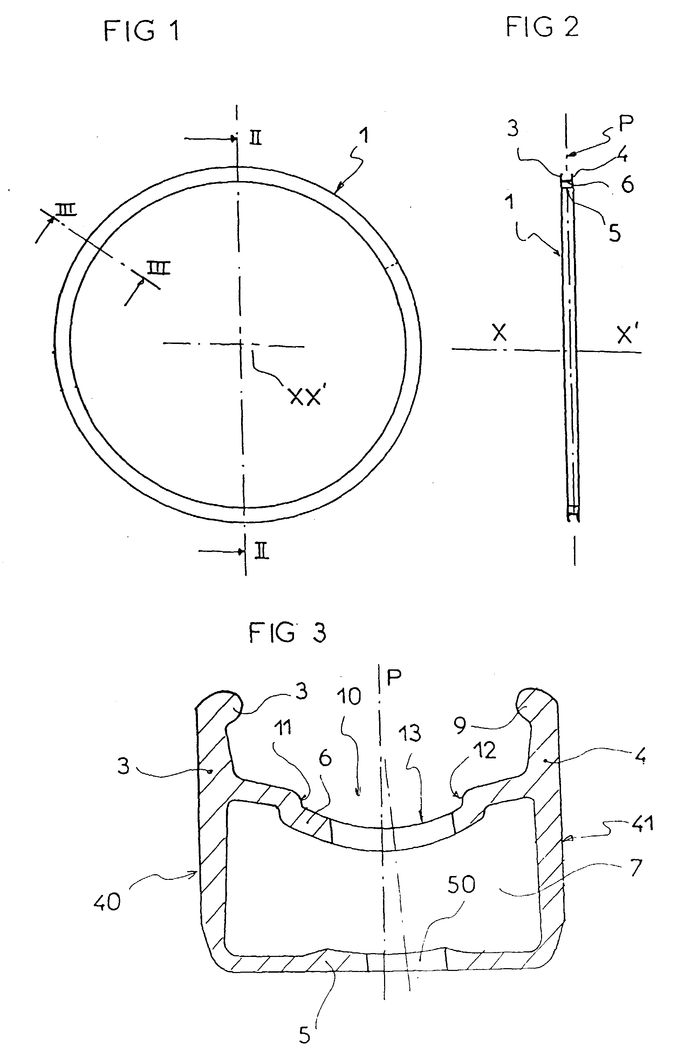

La jante fabriquée selon le procédé de l'invention, par exemple du type de celle illustrée par les figures 1, 2 et 3 et portant la référence générale (1), est destinée à être équipée de façon connue en soi, de rayons, d'un moyeu et d'un pneu pour constituer la roue d'un cycle. La jante proprement dite (1) de plan général de symétrie (P) est un anneau de grand diamètre d'axe (XX'), réalisé par un profilé en aluminium qui présente une section ayant la forme générale d'un U ouvert vers la périphérie extérieure, dans lequel est destiné à prendre place le pneu et la chambre à air éventuelle. Le profilé possède deux ailes (3, 4) latérales avantageusement symétriques par rapport au plan (P) reliées par deux parois transversales (5, 6) espacées l'une de l'autre : une paroi inférieure (5) et une paroi intermédiaire (6). Les deux parois (5, 6) formant avec les ailes latérales (3, 4) un caisson périphérique (7) destiné notamment à assurer la tenue mécanique et la rigidité de la jante, et notamment permettre aussi l'accrochage des rayons (non représentés). Notons, par ailleurs, que l'extrémité de chacune des ailes (3, 4) comprend avantageusement une saillie d'extrémité (8, 9) destinée à retenir le pneu équipant la roue. Par ailleurs, la paroi intermédiaire (6) comprend un logement circulaire périphérique de retenue et de centrage (10) comprenant deux parois verticales (11, 12) et un fond (13) concave et dont la courbure est, par exemple, un cercle. Comme cela est connu, les deux parois transversales (5, 6) sont percées d'une série de trous (50) destinés à recevoir des oeillets de retenue destinés à retenir les rayons. Ajoutons à cela que la face externe (40, 4) des deux ailes (3, 4) constitue les faces ou flancs de freinage.

De façon connue, la jante est réalisée à partir d'un morceau de profilé qui est découpé dans une barre, cintré selon un anneau circulaire puis assemblé bout à bout. Le profilé est par exemple un alliage d'aluminium, ou au magnésium.

Le cintrage est réalisé selon une technique connue qui ne sera pas décrite en détails. De façon connue aussi, après cintrage, le morceau de profilé est assemblé bout à bout par exemple par une technique connue de soudure, ou d'assemblage mécanique par emmanchement, ou par collage.

Ensuite, la jante est percée d'une pluralité de trous (50) destinés aux rayons de liaison avec le moyeu. Habituellement, ces orifices sont équipés d'oeillets qui servent de siège aux écrous des rayons. De façon connue, deux types d'oeillets sont habituellement utilisés, les oeillets simples sertis sur la paroi inférieure (5), et les oeillets doubles qui traversent le caisson (7) en prenant appui sur chacune des parois (5) et (6). D'autres techniques peuvent être utilisées. Par exemple, les écrous sont équipés d'une rondelle qui élargit sa surface d'appui sur la paroi inférieure. Ou bien les écrous sont posés directement sur la paroi (5).

De façon préférentielle, la jante est équipée d'oeillets de type double. Mais ceci n'est pas essentiel vis à vis de l'invention.

Selon le procédé de l'invention, dans une étape complémentaire faite au cours du processus de fabrication, il est réalisé un usinage chimique qui consiste à procéder à l'enlèvement de métal par dissolution du métal dans un bain chimique agressif du type acide ou basique.

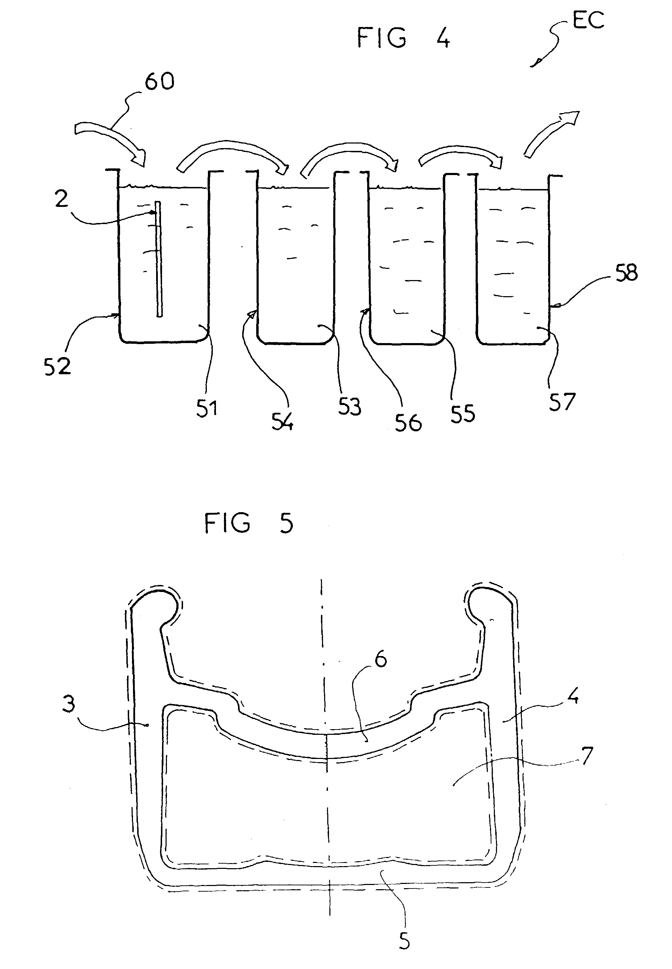

La figure 4 illustre cette étape complémentaire proprement dite de façon schématique et lors de laquelle, après préparation de la jante, il est procédé aux différentes phases successives suivantes :
- une première phase qui consiste à immerger (60) la jante (2) dans une solution d'attaque pour usinage chimique. Cette solution est, par exemple, un bain agressif (51) acide ou basique contenu dans une cuve d'immersion (52) ,
- une deuxième phase qui consiste ensuite à rincer la jante dans un bain de rinçage (53) contenu dans une deuxième cuve (54),
- une troisième phase qui consiste à procéder à une neutralisation dans un bain de neutralisation (55) contenu dans une cuve de neutralisation (56) sulfochromique,
- la jante subit ensuite un deuxième rinçage dans un bain de rinçage (57).

Lors de la phase d'attaque chimique pendant laquelle la jante est immergée dans le bain agressif (51), il y a attaque de la matière et dissolution de celle-ci. L'épaisseur du profilé diminue donc progressivement et la profondeur de l'usinage chimique est, bien entendu, fonction du bain utilisé et du temps d'immersion. La figure 5 illustre le profilé avant l'usinage chimique par un trait fin interrompu, et un trait fort continu une fois le traitement réalisé. On voit sur cette figure que l'épaisseur des différentes parois (3, 4, 5, 6) a diminué et que, de ce fait, tout en restant robuste et résistante, la jante obtenue est plus légère qu'une jante de robustesse équivalente. Notons, par ailleurs, que les faces internes du caisson (7) ont aussi subi une dissolution grâce au produit y étant pénétré par les différents trous (50) réalisés dans les parois transversales (5, 6).

L'usinage chimique de la jante est réalisé selon un processus connu en lui-même. Dans le cas où le matériau utilisé est un alliage d'aluminium, on utilise un bain agressif de soude caustique ou de sulfure de sodium dont la température est régulée à environ 80°C. L'attaque chimique dure environ 12 minutes, et la jante est dissoute sur une épaisseur de l'ordre de 2 dixièmes de millimètre. Les jantes sont maintenues dans le bain agressif par des points d'attache situés au niveau de leurs flancs. Ces points d'attache perturbent localement l'attaque chimique, et génèrent des saillies locales correspondant à des zones non attaquées. Mais, selon une technique de finition préférée, les flancs des jantes seront usinés ultérieurement pour former des surfaces de freinage. Ces saillies locales disparaîtront donc lors de l'usinage des flancs. Selon une autre technique, les jantes reposent dans le bain agressif sur des rouleaux entraînés en rotation. Les jantes sont elles-mêmes entraînées en mouvement, ce qui améliore l'homogénéité de l'attaque chimique.

Si la jante est en alliage de titane, l'agent d'attaque peut être de l'acide fluorohydrique ou de l'acide fluosilicique mélangé à de l'acide nitrique.

Après le rinçage, la jante peut subir des opérations de finition connues telles que l'usinage du joint de soudure, lorsque les deux extrémités de la jante ont été assemblées par soudure, traitement de surface anodique, usinage des flancs latéraux (40, 41) pour former des surfaces de freinage, tel que cela est décrit dans la demande de brevet européen 93 401704.7. Dans ce cas, il faut remarquer que le profilé brut, c'est-à-dire celui dont la section est représentée en trait interrompu dans la figure 5, présente des flancs dont l'épaisseur tient compte à la fois de l'attaque chimique et de l'usinage des surfaces de freinage qui est ensuite réalisé. Une autre opération consiste à poser les oeillets dans les trous (50) pour ensuite mettre en place les rayons de liaison avec le moyeu de la roue.

Ces différentes opérations ne sont pas essentielles au regard de l'invention. Elles ne sont indiquées qu'à titre d'exemple.

Selon un autre mode de mise en oeuvre de l'invention, le morceau de profilé est plongé à l'état brut, c'est-à-dire avant cintrage dans le bain agressif (51) puis dans les bains suivants.

Une fois le traitement réalisé, la barre de profilé présente en section la forme représentée en trait fort dans la figure 5. La barre est ensuite cintrée puis assemblée bout à bout pour former la jante. Dans ce cas, comme l'épaisseur des flancs est diminuée, il peut être préféré d'assembler les deux bouts de la barre cintrée à l'aide d'un manchon engagé en force dans les deux extrémités. D'autres techniques peuvent cependant convenir, notamment la soudure.

En variante, le morceau de la barre est cintré puis il subit les opérations de traitement chimique avant l'assemblage de ses deux bouts.

L'usinage chimique qui a été décrit aboutit à une jante présentant en section des épaisseurs de parois relativement faibles, d'où un gain de masse qui donne une diminution du poids et de l'inertie de la jante. Une bonne rigidité de la jante en flexion et en torsion est cependant obtenue grâce au matériau utilisé et à la forme finale de la section de la jante.

En d'autres termes, selon un mode avantageux de mise en oeuvre de l'invention, on choisit pour réaliser la jante un matériau présentant une rigidité élevée, ce qui permet de diminuer l'épaisseur de paroi. Pour que l'extrusion d'un tel profilé et le cas échéant l'assemblage de la barre de profilé après cintrage soient facilités, le profilé est extrudé avec une épaisseur de paroi égale à l'épaisseur finale souhaitée augmentée partout d'une surépaisseur sensiblement uniforme qui est ultérieurement dissoute par une attaque chimique.

Le procédé de l'invention permet avantageusement de réaliser des jantes avec une épaisseur de paroi transversale (5) remarquablement faible. Or, il est usuel de sertir sur cette paroi les oeillets pour la mise en place des rayons.

Pour une meilleure répartition des contraintes transmises par les rayons, les oeillets utilisés sont de préférence de type double.

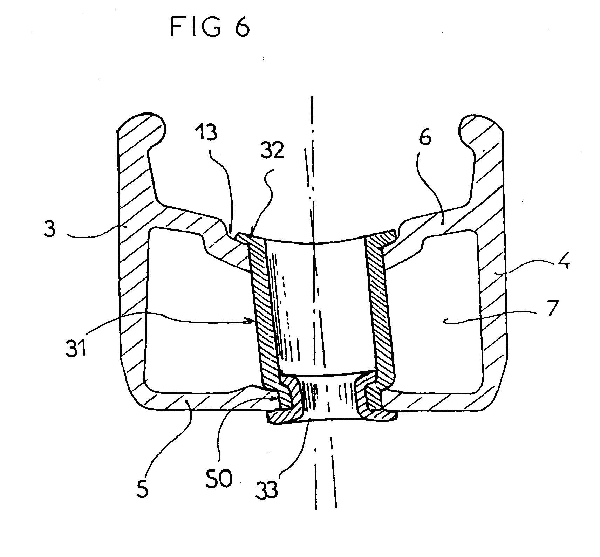

La figure 6 représente en section la jante de la figure 3 équipée d'un tel oeillet. Comme cela est représenté, l'oeillet présente un corps (31) en forme de cuvette cylindrique qui est engagée dans un orifice situé sur le fond (13) de la paroi intermédiaire (6). Le corps présente dans sa partie supérieure une collerette (32) qui prend appui sur le fond (13). Vers le bas, la cuvette se referme en une sorte de col qui traverse l'orifice inférieur (50). A ce niveau, un anneau de sertissage (33) assemble le col de la cuvette à la paroi inférieure (5). De façon connue, l'anneau de sertissage et le fond de la cuvette (31) sont prévus pour servir de siège à l'écrou d'un rayon de liaison avec un moyeu.

Ce type d'oeillet est préféré avec la jante telle qu'elle à été décrite précédemment car il assure à intervalle régulier une liaison mécanique entre les deux parois transversales (5) et (6) du caisson. Les sollicitations que les rayons de la roue exercent sur la jante sont de ce fait réparties entre les deux parois transversales (5) et (6).

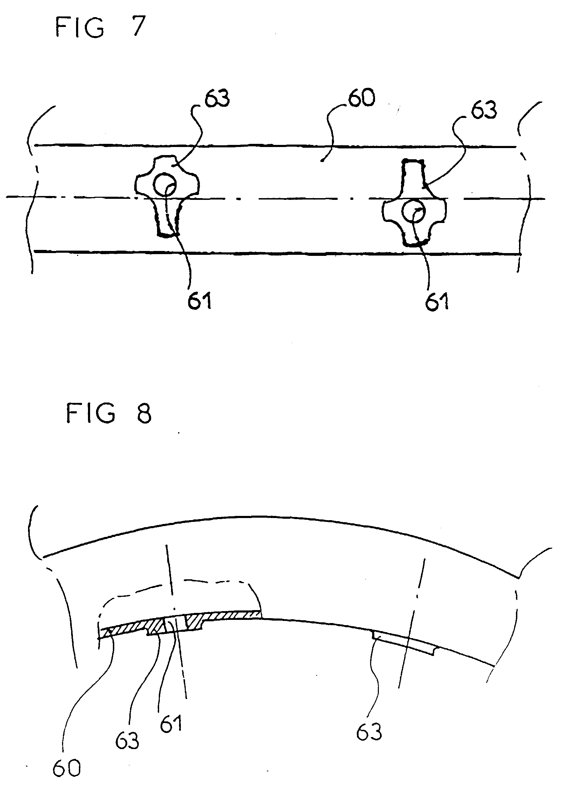

Il est, bien entendu, possible de prévoir des zones que l'on ne souhaite pas voir attaquées chimiquement. C'est, par exemple, le cas des parois transversales (5, 6) au niveau des trous (50) de retenue des rayons. Ainsi, pour conserver l'épaisseur initiale au niveau de ces zones, il est possible, par un masquage préliminaire réalisé au niveau de ces dites zones et avant immersion, de les préserver de l'attaque chimique. Pour illustrer cela, la figure 7 représente partiellement la paroi inférieure (60) d'une jante, vue de l'intérieur, au niveau d'un trou (61) prévu pour la pose d'un oeillet. La figure 8 représente la même jante vue de côté.

La jante représentée a subi les opérations d'usinage chimique décrites précédemment. Autour du trou (61), la jante présente une paroi inférieure (60) avec une zone (63) d'épaisseur renforcée. Le trou (61) se trouve au centre de la zone (63). Cette zone présente par exemple une forme d'étoile à quatre branches orientées radialement par rapport au trou (63). De façon connue, les trous sont percés au milieu de la paroi inférieure de la jante, ou en quinconce. Les zones (63) peuvent être réalisées autour des trous de façon symétrique ou dissymétrique. La figure 7 montre une disposition en quinconce des trous et des zones dissymétriques d'épaisseur renforcée, avec une branche plus longue orientée transversalement. La zone (63) a été obtenue par un masquage local de la jante brute, avant usinage, par exemple au moyen d'un vernis ou autre cache approprié. Ce vernis a protégé localement la zone, qui n'a donc pas été dissoute au cours de l'attaque chimique. Ainsi, dans la zone (63), la surépaisseur du pont inférieur de la jante correspond à l'épaisseur de matière qui a été dissoute sur le reste de la jante.

La jante peut présenter des zones telles que la zone (63) au niveau de chaque trou prévu pour recevoir un rayon. Ces zones renforcent localement la paroi inférieure de la jante en diffusant sur une surface relativement importante de la paroi les contraintes que la tension des rayons transmet.

Des zones de renfort peuvent être créées localement de la même façon dans d'autres faces de la jante, en particulier au niveau des parois transversales supérieure et inférieure, quelle que soit leur forme, et en particulier quels que soit l'orientation et le rayon de leur courbure. La technique d'usinage chimique mise en oeuvre permet de réaliser ces zones d'épaisseur renforcée avec une grande souplesse.

L'invention n'est pas limitée aux modes de réalisation décrits et représentés à titre d'exemple, mais elle comprend aussi tous les équivalents techniques tels qu'ils sont définis par les revendications ci-jointes.

## Revendications

1. Procédé de fabrication d'une jante (2) pour cycle du type qui consiste à cintrer un morceau de profilé (14, 16) obtenu par filage ou extrusion d'alliage d'aluminium, ou de magnésium, caractérisé en ce que dans une étape complémentaire (EC) il est réalisé un usinage chimique qui consiste à procéder à l'enlèvement de métal par dissolution dans un bain chimique agressif.

2. Procédé de fabrication d'une jante (2) pour cycle selon la revendication 1, caractérisé en ce que la jante (2) est immergée dans un bain chimique (51) agressif du type acide ou basique.

3. Procédé de fabrication d'une jante (2) pour cycle selon la revendication 2, caractérisé en ce qu'après la première phase de l'étape complémentaire qui consiste à immerger (50) la jante (2) dans un bain agressif (51), il est procédé ensuite à une deuxième phase qui consiste à rincer la jante dans un bain de rinçage (53) contenu dans une deuxième cuve (54) suivie par une troisième phase qui consiste à procéder à une neutralisation dans un bain de neutralisation (55) contenu dans une cuve de neutralisation (56) sulfochromique, puis lors d'une quatrième phase, la jante subit un deuxième rinçage dans un bain de rinçage (57).

4. Procédé de fabrication d'une jante (2) pour cycle selon la revendication 3, caractérisé par le fait que le bain agressif (51) consiste en de la soude caustique.

5. Procédé de fabrication d'une jante (2) pour cycle selon la revendication 3, caractérisé par le fait que le bain agressif (51) consiste en du sulfure de sodium.

6. Procédé de fabrication d'une jante (2) pour cycle selon la revendication 3, caractérisé par le fait que les jantes sont plongées dans le bain agressif (51) en étant maintenues par des points situés sur leurs flancs latéraux.

7. Procédé de fabrication d'une jante (2) pour cycle selon la revendication 3, caractérisé par le fait que les jantes reposent dans le bain agressif (51) sur des rouleaux entraînés en rotation.

8. Procédé de fabrication d'une jante (2) pour cycle selon la revendication 3, caractérisé par le fait que certaines zones de la jante sont masquées avant immersion dans le bain agressif, pour créer des zones (63) d'épaisseur renforcées après dissolution.

9. Jante pour cycle réalisée selon l'une quelconque des revendications précédentes, caractérisée par le fait que sa paroi inférieure (60) présente localement des zones (63) d'épaisseur renforcée.

10. Roue pour cycle, caractérisée par le fait qu'elle comprend une jante réalisée selon la revendication 9.

## Patentansprüche

1. Verfahren zur Herstellung einer Felge (2) für ein Rad von dem Typ, der darin besteht, ein Profilstück (14, 16), das durch Strangpressen oder Extrudieren einer Aluminium- oder Magnesiumlegierung erhalten ist, rund zu biegen,
**dadurch gekennzeichnet, daß**
in einem ergänzenden Schritt (EC) eine chemische Bearbeitung ausgeführt wir, die darin besteht, das Entfernen von Metall durch Auflösung in einem aggressiven chemischen Bad durchzuführen.

2. Verfahren zur Herstellung einer Felge (2) für ein Rad gemäß Anspruch 1, dadurch gekennzeichnet, daß die Felge (2) in ein aggressives chemisches Bad (51) vom Säure- oder Basentyp eingetaucht wird.

3. Verfahren zur Herstellung einer Felge (2) für ein Rad gemäß Anspruch 2, dadurch gekennzeichnet, daß nach der ersten Phase des ergänzenden Schrittes, die darin besteht, die Felge (2) in ein aggressives Bad (51) einzutauchen (50), danach eine zweite Phase durchgeführt wird, die darin besteht, die Felge in einem Spülbad (53) abzuspülen, das in einer zweiten Wanne (54) enthalten ist, gefolgt von einer dritten Phase, die darin besteht, eine Neutralisation in einem Neutralisationsbad (55) durchzuführen, das in einer sulfochromischen Neutralisationswanne (56) enthalten ist, und dann in einer dritten Phase die Felge ein zweites Abspülen in einem Spülbad (57) erfährt.

4. Verfahren zur Herstellung einer Felge (2) für ein Rad gemäß Anspruch 3, dadurch gekennzeichnet, daß das aggressive Bad (51) aus Natronlauge besteht.

5. Verfahren zur Herstellung einer Felge (2) für ein Rad gemäß Anspruch 3, dadurch gekennzeichnet, daß das aggressive Bad (51) aus Natriumsulfid besteht.

6. Verfahren zur Herstellung einer Felge (2) für ein Rad gemäß Anspruch 3, dadurch gekennzeichnet, daß die Felgen in das aggressive Bad (51) eingetaucht werden, wobei sie an Punkten gehalten werden, die sich auf ihren lateralen Flanken befinden.

7. Verfahren zur Herstellung einer Felge (2) für ein Rad gemäß Anspruch 3, dadurch gekennzeichnet, daß die Felgen in dem aggressiven Bad (51) auf Walzen ruhen, die zu einer Rotationsbewegung angetrieben werden.

8. Verfahren zur Herstellung einer Felge (2) für ein Rad gemäß Anspruch 3, dadurch gekennzeichnet, daß bestimmte Bereiche der Felge vor dem Eintauchen in das aggressive Bad (51) maskiert werden, um Bereiche (63) mit einer erhöhten Dicke nach der Auflösung zu bilden.

9. Felge für ein Rad, gemäß irgendeinem der vorangehenden Ansprüche, dadurch gekennzeichnet, daß ihre untere Wand (60) lokale Bereiche (63) mit einer erhöhten Dicke aufweist.

10. Rad für ein Fahrrad, dadurch gekennzeichnet, daß es eine Felge aufweist, die gemäß Anspruch 9 hergestellt ist.

## Claims

1. Method for manufacturing a rim (2) for a cycle of the type consisting in bending a piece of shaped element (14, 16) obtained by spinning or extrusion of an aluminum or magnesium alloy, characterized in that, in a complementary step (EC), a chemical machining is performed which consists in proceeding with the removal of metal by dissolution in an aggressive chemical bath.

2. Method for manufacturing a rim (2) for a cycle according to claim 1, characterized in that the rim (2) is immersed in an aggressive chemical bath (51) of the acid or basic type.

3. Method for manufacturing a rim (2) for a cycle according to claim 2, characterized in that after the first phase of the complementary step consisting in immersing (50) the rim (2) in an aggressive bath (51), a second phase is undertaken consisting in rinsing the rim in a rinsing bath (53) contained in a second container (54) followed by a third phase consisting in proceeding with a neutralization in a neutralizing bath (55) contained in a sulfochromic neutralization container (56), then during a fourth phase, the rim is subject to a second rinsing in a rinsing bath (57).

4. Method for manufacturing a rim (2) for a cycle according to claim 3, characterized in that the aggressive bath (51) consists of caustic soda.

5. Method for manufacturing a rim (2) for a cycle according to claim 3, characterized in that the aggressive bath (51) consists of sodium sulphide.

6. Method for manufacturing a rim (2) for a cycle according to claim 3, characterized in that the rims are immersed in the aggressive bath (51) while being maintained at points located on their lateral sides.

7. Method for manufacturing a rim (2) for a cycle according to claim 3, characterized in that the rims rest in the aggressive bath (51) on rollers driven in rotation.

8. Method for manufacturing a rim (2) for a cycle according to claim 3, characterized in that certain zones of the rims are masked before immersion in the aggressive bath to create zones (63) with reinforced thickness after dissolution.

9. Rim for a cycle obtained according to any of the preceding claims, characterized in that its lower wall (60) has local zones (63) with reinforced thickness.

10. Wheel for a cycle, characterized in that it comprises a rim obtained according to claim 9.
